# EUROPEAN PATENT APPLICATION

(11) **EP 3 835 866 A1**
(43) Date of publication of application: **16.06.2021**
(21) Application number: 19214786.6
(22) Date of filing: 10.12.2019
(51) Int. Cl.: G03B 21/16, G03B 21/20

(54) **A LASER REFLECTION UNIT**

(71) Applicant: Barco, 8500 Kortrijk (BE)
(72) Inventor: Hansen, Peter Sigmund, 1630 Gamle Fredrikstad (NO); Ruud, Petter, 1630 Gamle Fredrikstad (NO)
(74) Representative: V.O.

(57) **Abstract**

The present invention provides a laser reflection unit for a laser phosphor projector. The unit comprises a housing and a wheel rotatably drivably received in the housing. The wheel has a top side provided with a phosphor layer for an converting incident laser light beam into a reflected light beam. Further, the wheel has a bottom side opposite to the top side, the bottom side being provided, at a radial outward annular portion from a center axis of the wheel, with cooling fins inducing an air flow flowing in a radial outward direction. The laser reflection unit further comprising a heat exchanger received in the housing for cooling the air flow flowing from the wheel, the heat exchanger extending along a mainly circumferential contour coaxial with the center axis of the wheel. The housing is provided with an inner surface guiding the air flow from the wheel towards and along the heat exchanger.

## Description

### TECHNICAL FIELD

The present disclosure relates to a laser reflection unit for a laser phosphor projector.

### BACKGROUND

Laser phosphor projectors include a laser reflection unit that converts high intensity blue laser into white light for use in illumination optics of said laser phosphor projector. When transforming the light, some of the energy get loss and transform into heat absorbed in the phosphor layer applied directly on a wheel in the laser reflection unit. The heat transmits into the wheel and the temperature is rising. To keep the temperature in the wheel on a safe level, the heat needs to be distributed at lower intensity to the cooler soundings.

In conventional solutions cold air is blown directly on the phosphor wheel itself by a fan inside the unit making a circulation towards the heated phosphor wheel and push the air to cooled surfaces inside the unit. The hot air needs to be guided to be cooled inside the unit by a heat exchanger made of heat pipe technology or large air-cooled areas in contact with the surrounding cooler regions. The conventional solution is typically large, heavy and complex.

There is therefore a need for improvement in the art.

### SUMMARY

In order to overcome the problems of the prior art, there is therefore provided a laser reflection unit for a laser phosphor projector, comprising a housing and a wheel rotatably drivably received in the housing, the wheel having a top side provided with a phosphor layer for converting an incident laser light beam into a reflected light beam, the wheel further having a bottom side opposite to the top side, the bottom side being provided, at a radial outward annular portion from a center axis of the wheel, with cooling fins inducing an air flow flowing in a radial outward direction, the laser phosphor unit further comprising a heat exchanger received in the housing for cooling the air flow flowing from the cooling wheel, the heat exchanger extending along a mainly circumferential contour coaxial with the center axis of the wheel, wherein the housing is provided with an inner surface guiding the air flow from the wheel towards and along the heat exchanger.

By applying a housing inner surface arranged for guiding the air flow from the cooling wheel towards and along the heat exchanger the application of the fan is superfluous, thereby providing an energy efficient, compact, light and compact solution.

Advantageously, the housing inner surface defines a composed chamber structure having a radial center portion receiving a central portion of the wheel, and a radial outer annular portion receiving the heat exchanger, the radial outer annular portion of the chamber preferably having a mainly toroidal shape, thereby providing a mainly circular air path, in cross sectional view, wherein the air is alternately cooled down by the heat exchanger and heated up by the wheel.

Specifically, by providing a housing inner surface defining curved edge sections between a ceiling and a radial outer side wall, and between a floor and the radial outer side wall, in the radial outer annular portion of the chamber, preferably formed as a smooth wall contour, the air flow is guided from the wheel towards and along the heat exchanger and subsequently back to the wheel, such that an air flow resistance can be balanced to the pressure of the cooling fins on the wheel without the need of an additional fan.

Advantageously, the housing inner surface may run from a radial outer annular chamber portion floor via a curved edge section towards the radial center chamber portion guiding the air flow from the heat exchanger towards the wheel so as to close a circulating air flow, thereby provided a closed air flow contour, in a trans sectional view of the toroidal shape, for alternately cooling down the air via the heat exchanger and heating up the air via the wheel.

Advantageously, the housing inner surface geometry reduces the air flow resistance to a degree permitting the absence of an additional fan.

### BRIEF DESCRIPTION OF DRAWINGS

These and other features, aspects, and advantages of the apparatus, systems and methods of the present disclosure will become better understood from the following description, appended claims, and accompanying drawing wherein:
Figure 1 shows a schematic cross sectional side view of a laser reflection unit according to the invention.
Figure 2 shows a schematic exploded view of the laser reflection unit shown in Fig. 1.
Figure 3 shows a schematic perspective bottom view of an top part of a housing and a wheel of the laser reflection unit shown in Fig. 1.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The terms "about" or "approximate" and the like are synonymous and are used to indicate that the value modified by the term has an understood range associated with it, where the range can be +20%, +15%, +10%, +5%, or +1%. The term "substantially" is used to indicate that a result (e.g., measurement value) is close to a targeted value, where close can mean, for example, the result is within 80% of the value, within 90% of the value, within 95% of the value, or within 99% of the value.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

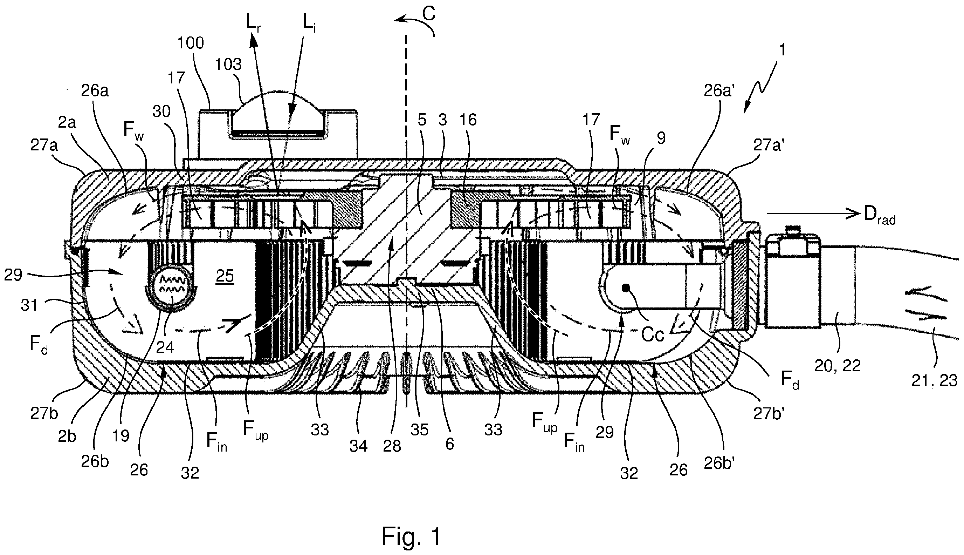

Figure 1 shows a schematic cross sectional side view of a laser reflection unit 1 according to the invention. The laser reflection unit 1 can be applied in a laser phosphor projector for converting high intensity blue laser into white light.

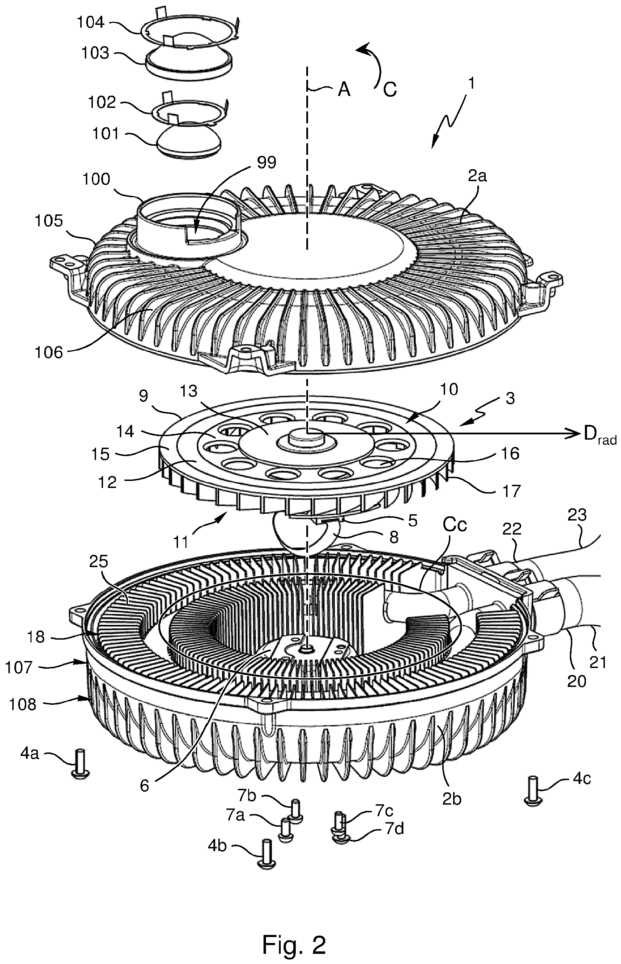

Figure 2 shows a schematic exploded view of the laser reflection unit 1 shown in Fig. 1.

The laser reflection unit 1 is provided with a housing 2 and a wheel 3 rotatably drivably received in said housing 2. In the shown embodiment, the housing 2 includes a top portion 2a and a bottom portion 2b that can be removed from each other, e.g. for inspection and/or reparability purposes, both portion 2a,b being illustrated separate from each in Fig. 2. In another embodiment, the housing 2 may include another number of portions, e.g. three or more than three portions. In an assembled state, as shown in Fig. 1, the housing portions 2a,b are connected to each other, using screws 4a-c or other connection elements such as clamping elements. Then, the housing encloses an interior compartment or chamber that may be dust sealed e.g. for the purpose of receiving therein the wheel 3 and a heat exchanger described below. so as to be driven to rotate in the housing

The wheel 3 is rotatably drivably received in the housing 2 meaning that the wheel 3 is received in the housing 2 so as to be driven to rotate in the housing 2, e.g. by means of an actuator such as a motor.

The laser reflection unit 1 shown in Fig. 1 includes a floating bearing motor 5 connected to the wheel 3 to drive the wheel 3 so as to rotate or spin in the housing 2. In the shown embodiment, the motor 5 is mounted on a central portion of the housing bottom portion 2b, the central portion preferably having a machined plane surface 6, using screws 7a-d or other connection elements such as clamping elements. The unit 1 includes a power cable 8 to supply electric power to the wheel motor 5.

The wheel 3 is mainly disc shaped, in the shown embodiment having a mainly circular outer peripheral contour 9 and an axis of symmetry A. The wheel 3 has a top side 10 and a bottom side 11 opposite to the top side 10. The top side 10 is provided with a phosphor layer 12 for converting an incident laser light beam Li into a reflected light beam Lᵣ. The wheel 3 in the shown embodiment includes a number of concentric portions, viz. a radial central portion 13, a radial intermediate annular portion 14 and a radial outward annular portion 15. Here, the radial outward annular portion 15 adjoins the outer peripheral contour 9 of the wheel 3, while the radial intermediate annular portion 14 is located, viewed from the axis of symmetry A, between the radial central portion 13 and the radial outward annular portion 15.

In the shown embodiment, the phosphor layer 12 is provided on the top side 10 of the radial outward annular portion 15. The radial intermediate annular portion 14 is provided with a series of through holes 16 distributed mainly evenly in a circumferential direction C around the axis of symmetry A. Further, the radial central portion 13 of the wheel 3 is mounted, on its bottom side 11, on a driving part of the motor 5. It is noted that, in principle, other configurations of the wheel could be applied, e.g. by including more radial annular portions or by mounting the top side 10 of the wheel 3 to a motor that rotatably drives the wheel 3.

The bottom side 11 of the wheel 3 is provided, at the radial outward annular portion 15, with cooling fins 17 shaped as radial fan fins generating a local overpressure to as to induce an air flow F_{w} flowing in a radial outward direction D_{rad}, explained in more detail below. The wheel 3 operates both as a fan and a heatsink.

The laser reflection unit 1 further includes a heat exchanger 18 received in the housing 2 for cooling the air flow F_{w} flowing from the cooling fins 17 of the wheel 3. The heat exchanger 18 extends along a mainly circumferential contour Cc coaxial with the axis of symmetry A of the wheel 3, also referred to as the center axis A of the wheel 3. The mainly circumferential contour Cc is preferably located slightly below the mainly circular outer peripheral contour 9 of the wheel 3. The heat exchanger 18 includes a cooling tubing 19 provided with a fluid input port 20 connectable to a fluid input tubing 21, and a fluid output port 22 connectable to a fluid output tubing 23. The fluid input tubing 21 an the fluid output tubing 23 are exterior to the laser reflection unit 1 and may be connected to a common complete cooling circuit in the projector for internal or external radiator dissipation of cooling liquid 24 flowing in the cooling tubing 19 and optionally other cooling tubings in the laser phosphor projector. Further, the heat exchanger 18 includes heat absorber fins 25 attached to the cooling tubing 19 and extending in a mainly transverse direction to a local tubing body axis following the mainly circumferential contour Cc.

In the shown embodiment, the housing 2a,b of the laser reflection unit 1 accommodates the wheel 3, the motor 5 that rotatably drives the wheel 3 in the housing 2, and the heat exchanger 18. Preferably, the housing 2 is mainly coaxial with the wheel 3, and preferably also with the heat exchanger 18.

The housing top portion 2a is provided with an opening 99 and a fitting 100 surrounding said opening 99 and receiving a first lens 101 mounted via a first clipping element 102 to said fitting 100. Further, the fitting 100 receives a second lens 103 on top of said first lens 101 mounted via a second clipping element 104 to said fitting 100.

During operation of the laser reflection unit 1 the wheel 3 rotates and reflects an incident laser light beam Li entering via the second lens 103, the first lens 101, and the opening 99 towards the phosphor layer 12 on the wheel 3. Then, the incident beam Li reflects via the phosphor layer 12 as a reflected light beam Lᵣ propagating back via the opening 99, the first lens 101 and the second lens 103 outwardly. Typically, the incident beam Lᵢ may be blue laser light, while the reflected beam Lᵣ may be white light. However, other beam characteristics are applicable, e.g. having other spectral characteristics. Further, another lens construction may be applied, e.g. including other mounting elements and/or less or more than two lenses. Preferably, the lenses 101, 103 are sealed so as to form the dust sealed compartment or chamber inside the housing 2.

When converting the incident laser beam Li into the reflected beam Lᵣ, some of the optical energy get loss and transforms into heat absorbed in the phosphor layer 12 that is preferably applied directly on the top side 10 of the wheel 3. The heat transmits into the wheel material directly and then dissipates via the bottom side 11 of the wheel 3. The air at the wheel bottom side 11 flows in a spiral movement from the axis of symmetry A towards and through the cooling fins 17 on the bottom side 11 of the wheel 3, opposite to the phoshpor layer 12, to the outer peripheral contour 9 of the wheel 3, and subsequently further to the interior surface of the housing 2. Heat from the wheel 3 disipates to the air by convection between the cooling fins 17.

The housing 2 may be constructed from any suitable material, preferably a heat conducting material such as a metal, e.g. magnesium. The housing top portion 2a is provided, at its exterior surface 105 with fins 106 for transferring heat to the surrounding area. Similarly, also the exterior surface 107 of the housing bottom portion 2b is provided with fins 108 for cooling the same. The rotating wheel 3, as well as the cooling tubing 19 and the heat absorbers fins 25 of the heat exchanger 18 may also be made from any suitable material, preferably a heat conducting material such as a metal, e.g. aluminum.

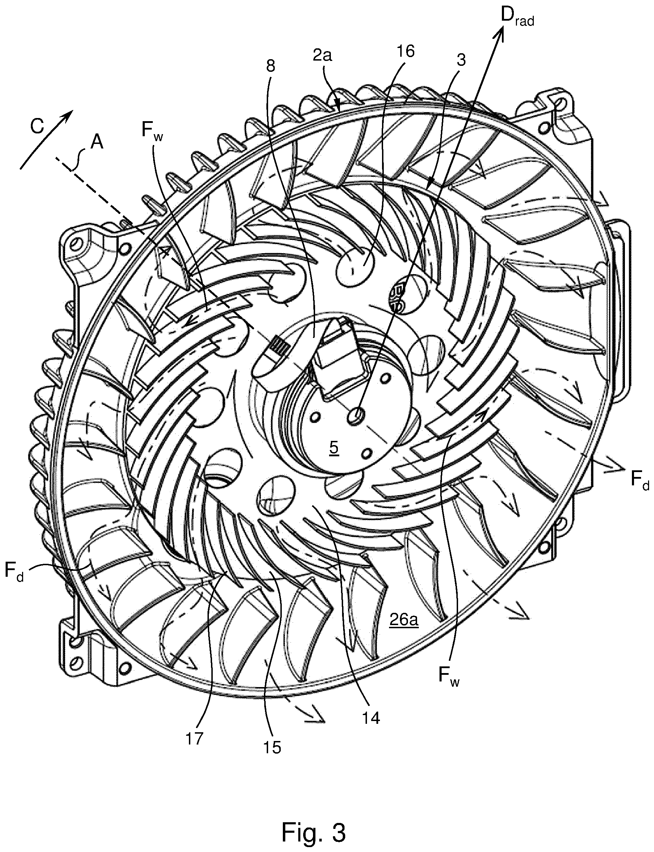

Figure 3 shows a schematic perspective bottom view of a top part of a housing, also referred to as the top portion 2a, and the wheel 3 of the laser reflection unit 1 shown in Fig. 1.

According to an aspect, the housing 2 is provided with an inner surface 26 guiding the air flow F_{w} from the cooling fins 17 of the wheel 3 towards and along the heat exchanger 18. In the shown embodiment, the inner surface 26 has curved sections guiding causing the air flow F_{w} to flow from the cooling fins 17 of the wheel 3 in the radial outward direction D and subsequently in a downward flow F_{d} towards the housing bottom portion 2b, towards and along the heat absorber fins 25 of the heat exchanger 18, subsequently in a radial inward flow Fᵢₙ towards the axis of symmetry A, and subsequently in an upward flow Fᵤₚ towards the wheel 3, thus forming a circulating flow F_{w}, F_{d}, Fᵢₙ, Fᵤₚ., see e.g. Figure 1.

The shape of housing inner surface 26 leads the heated air from the wheel cooling fins 17 in the same radial direction caused by the wheel 3, i.e. in the radial outward direction D_{rad}, and turns the airflow axially downwardly into and through the heat exchanger absorber fins 25.

The housing inner surface 26 guiding the air flow F_{w} from the cooling fins 17 of the wheel 3 towards and along the heat absorber fins 25 of the heat exchanger 18 include, in a cross sectional view of the laser reflection unit 1 through the axis of symmetry A, curved corner sections 26a, a' at a radial top peripheral contour 27a, a' of the housing top portion 2a, smoothly guiding the airflow downwardly, and curved corner sections 26b, b' at a radial bottom peripheral contour 27b, b' of the housing bottom portion 2b, for subsequently smoothly guiding the airflow radially inwardly towards the axis of symmetry A.

In the shown embodiment, the housing inner surface 26 also referred to as a housing inner silhouette defines a composed chamber structure having a radial center portion 28 receiving a radial central portion 13 of the wheel 3 in an upper part of the radial center portion 28, and a radial outer annular portion 29 receiving the heat exchanger 18. Also the motor 5 driving the wheel 3 is accommodated in the radial center portion 28 of the composed chamber structure. The radial outward annular portion 15 of the wheel 3 extends into the radial outer annular portion 29.

The radial outer annular portion 29 of the chamber has a mainly toroidal shape extending around the axis of symmetry A.

Further, the housing inner surface 26 defines a ceiling 30, a radial outer side wall 31, and a floor 32 of the radial outer annular chamber portion 29. Here, the housing inner surface 26 defines curved edge sections 26, 26' between the ceiling 30 and the radial outer side wall 31, and curved edge sections 26b, b' between the floor 32 and the radial outer side wall 31. The curved edge sections 26 have also been referred to above as curved corner sections in the cross sectional view in Fig. 1. It is noted that the ceiling 30, the radial outer side wall 31, and the floor 32 of the radial outer annular chamber portion 29 can be flat, mainly flat or may have another shape, e.g. slightly curved, e.g. such that the ceiling 30, the radial outer side wall 31, the floor 32 and intermediate curved edge sections form an integral curved section having a curvature that is mainly constant or varies merely to a minor extend, resulting in a mainly circular section.

By forming a housing inner surface 26 having a smooth wall contour at a radial outward portion of the housing 2, i.e. at and near the radial outer side wall 31, the air flow is smoothly guided, i.e. with minimal resistivity, towards the floor 32 of the radial outer annular chamber portion 29.

In the shown embodiment, the housing inner surface 26 has an central inwardly depressed portion 35 defining a raised floor surface 6 of the radial center chamber portion 28, the raised floor also referred to as the machined plane surface 6 on which surface 6, in the shown embodiment, the motor 5 has been mounted.

Further, in the shown embodiment, the housing inner surface 26 runs from the radial outer annular chamber portion floor 32 via a curved edge section 33 towards the radial center chamber portion 28 or the raised floor surface 6 for guiding the air flow from the heat exchanger 18 and the floor 32 upwardly towards the wheel 3, thereby closing the circular air flow as discussed above.

The wheel 3 pumps air in a continuous circulation through the heat exchanger absorber fins 25. The air flows continuously in a mainly toroidal shape and is alternately cooled down by the exchanger 18 and heated up by the wheel 3.

Accordingly, air flow resistance is balanced to the pressure of the cooling fins 17 on the wheel 3 forming a radial fan without need of an additional pressurization fan as used in conventional solutions.

The housing inner surface 26 and the cooling fins 17 of the wheel 3 are arranged, in combination, for generating an air flow circulating in a cross sectional view of the radial outer annular chamber portion as shown in Fig. 1. In the shown embodiment, the air flow circulates along a more or less natural flow path in a mainly toroidal curved plane, along the mainly toroidal shape of the radial outer annular chamber portion 29. As the wheel 3 rotates during operation of the laser reflection unit 1, the air flow also has a component in the circumferential direction C, along the mainly circumferential contour Cc coaxial with the axis of symmetry A, thus resulting in a composed spiral shaped air flow having circular components described above along the toroid curved plane as well as a circumferential component along the mainly circumferential contour Cc.

By applying a toroidal shaped radial outer annular chamber portion 29 the wheel 3 generates a circulating air flow path along the heat exchanger fins 25 and the cooling tubing 19, thereby providing a relatively large interface surface between the air to be cooled and the heat exchanger 18 resulting in efficient cooling performance in a relatively compact dimensioned laser reflection unit 1.

Heat absorbed in the hot phosphor layer 12 on the wheel 3 is spread by transmission from the phosphor layer 12 through the heat conducting material in the wheel 3 that is formed as a combined fan and heat sink towards a larger area for exchange to air at the fin surfaces 17 on the bottom side 11 of the wheel 3. The hot air flowing at high speed inside the housing 2 exchanges heat by convection back into the heat exchanger fins 25 and the cooling tubing 19 connected to the complete cooling system internal or external to the projector. The liquid cooling distribution can be solved in a lot of different ways dependent of available circuits in the applications where the laser reflection unit 1 is used.

The wheel 3 in the laser reflection unit 1 is preferably made as a single part having functions of optically reflecting an incident laser beam Li, distributing generated heat and inducing the radial outwardly directed air flow F_{w}. By including the optical, heat transfer and air flow inducing functions, the wheel 3 performs as a laser beam reflector, heatsink and fan. Due to the arrangement of the housing inner surface 26 and the cooling fins 17 of the wheel 3, in combination, no additional fan is applied for inducing the air flow. According to an aspect, the wheel 3 can be the only air flow inducing element of the laser reflection unit 1. Other components in the laser reflection unit 1 may be passive, without moving parts such that a desired air flow is induced transferring heat to the liquid in the cooling tubing of the heat exchanger, the liquid flowing outwardly to a fluid output tubing that is exterior to the laser reflection unit 1.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

While the invention has been described hereinabove with reference to specific embodiments, this was done to clarify and not to limit the invention.

The skilled person will appreciate that various modifications and different combinations of disclosed features are possible without departing from the scope of the invention.

## Claims

1. A laser reflection unit for a laser phosphor projector, comprising a housing and a wheel rotatably drivably received in the housing, the wheel having a top side provided with a phosphor layer for converting an incident laser light beam into a reflected light beam, the wheel further having a bottom side opposite to the top side, the bottom side being provided, at a radial outward annular portion from a center axis of the wheel, with cooling fins inducing an air flow flowing in a radial outward direction, the laser reflection unit further comprising a heat exchanger received in the housing for cooling the air flow flowing from the wheel, the heat exchanger extending along a mainly circumferential contour coaxial with the center axis of the wheel, wherein the housing is provided with an inner surface guiding the air flow from the wheel towards and along the heat exchanger.

2. A laser reflection unit according to claim 1, wherein the housing inner surface defines a composed chamber structure having a radial center portion receiving a central portion of the wheel, and a radial outer annular portion receiving the heat exchanger.

3. A laser reflection unit according to claim 2, wherein the radial outer annular portion of the chamber has a mainly toroidal shape.

4. A laser reflection unit according to claim 2 or 3, wherein the housing inner surface defines a ceiling, a radial outer side wall, and a floor of the radial outer annular chamber portion.

5. A laser reflection unit according to claim 4, wherein the housing inner surface defines curved edge sections between the ceiling and the radial outer side wall, and between the floor and the radial outer side wall.

6. A laser reflection unit according to any of the preceding claims, wherein the housing inner surface defines a smooth wall contour at a radial outward portion of the housing.

7. A laser reflection unit according to any of the preceding claims 2-6, wherein the housing inner surface has an central inwardly depressed portion defining a raised floor of the radial center chamber portion.

8. A laser reflection unit according to any of the preceding claims 2-7, wherein the housing inner surface runs from the radial outer annular chamber portion floor via a curved edge section towards the radial center chamber portion guiding the air flow from the heat exchanger towards the wheel.

9. A laser reflection unit according to any of the preceding claims 2-8, wherein the wheel is located at an upper part of the radial center chamber portion such that the cooling fins extend into the radial outer annular chamber portion.

10. A laser reflection unit according to any of the preceding claims, wherein the housing inner surface and the wheel fins are arranged for generating an air flow circulating in a cross sectional view of the radial outer annular chamber portion.

11. A laser reflection unit according to any of the preceding claims, wherein the wheel is the only air flow inducing element.

12. A laser reflection unit according to any of the preceding claims, wherein the heat exchanger includes a tubing provided with a fluid input port and a fluid output port, the heat exchanger further including heat absorber fins attached to the tubing and extending in a mainly transverse direction to a local tubing body axis.

13. A laser reflection unit according to any of the preceding claims, wherein the housing is mainly coaxial with the wheel.
